# FASCICULE DE BREVET EUROPEEN

(11) **EP 3 049 794 B1**
(45) Date de publication et mention de la délivrance du brevet: **04.11.2020**
(21) Numéro de dépôt: 14772156.7
(22) Date de dépôt: 24.09.2014
(51) Int. Cl.: G01M 17/02, G01N 21/952, G01N 21/954

(54) **PROCÉDÉ D'INSPECTION ET LIGNE D'INSPECTION DE PNEUMATIQUES**
INSPEKTIONSVERFAHREN UND INSPEKTIONSLINIE FÜR REIFEN
INSPECTION METHOD AND INSPECTION LINE FOR TYRES

(30) Priorité: 26.09.2013 FR 1359264
(43) Date de publication de la demande: 03.08.2016
(73) Titulaire: Compagnie Générale des Etablissements Michelin, 63000 Clermont-Ferrand (FR)
(72) Inventeur: KROLCZYK, Cédric, F-63040 Clermont-Ferrand Cedex 09 (FR); LEOBAL, Christian, F-63040 Clermont-Ferrand Cedex 09 (FR)
(74) Mandataire: Roussy, Delphine
(86) Numéro de dépôt international: PCT/EP2014/070356
(87) Numéro de publication internationale: WO 2015/044194

(56) Documents cités:
- EP-A1- 2 275 777
- JP-A- 2006 300 678
- JP-A- 2011 226 971
- US-A1- 2006 090 557
- KAYSER D ET AL: "Fault detection in gray-value images of surfaces on different scales", VISUAL COMMUNICATIONS AND IMAGE PROCESSING; 20-1-2004 - 20-1-2004; SAN JOSE,, vol. 3744, 1 January 1999 (1999-01-01), pages 110-117, XP002433863, DOI: 10.1117/12.357701 ISBN: 978-1-62841-730-2

## Description

La présente invention concerne le domaine du contrôle visuel des pneumatiques.

L'inspection visuelle est largement développée dans le processus de fabrication des pneumatiques et fait encore le plus souvent appel à la dextérité des opérateurs chargés de vérifier l'absence d'imperfections visibles à la surface des pneumatiques pour s'assurer de leur conformité.

Pour assister les opérateurs dans la recherche d'éventuelles anomalies de surface, il est connu d'utiliser des machines d'inspection automatiques qui comprennent des moyens d'entraînement en rotation des pneumatiques et des moyens d'acquisition d'images numériques, les images numériques acquises étant ensuite comparées avec les images de références. De telles machines sont décrites par exemple dans les brevets EP 1 959 227, EP 2 023 078, EP 2 172 737 et WO2011/113711.

Néanmoins, la sélection visuelle des pneumatiques pouvant être inspectés par de telles machines d'inspection automatiques est réalisée par un opérateur. Il existe donc un risque de déclassement par l'opérateur de pneumatiques pourtant acceptables et un risque de perturbation desdites machines d'inspection dans le cas où l'opérateur sélectionne un pneumatique qui ne devrait pas être accepté.

Le brevet US 2006/0090557 décrit un procédé d'inspection et de correction d'un pneumatique, dans lequel la forme du pneumatique est mesurée et comparée à une norme, puis, si la forme du pneumatique respecte une norme, le pneumatique est évacué, ou, si la forme du pneumatique ne respecte pas la norme, le pneumatique est corrigé. Ensuite, la forme du pneumatique corrigé est à nouveau mesurée et comparée à la norme, pour éventuellement à nouveau corriger le pneumatique.

Le brevet JP2011226971 décrit un procédé d'inspection d'un pneumatique, dans lequel il est fait usage de caméras pour acquérir des images du pneumatique, l'image acquise étant comparée à une norme.

La présente invention a pour but d'améliorer les processus d'inspection automatique des pneumatiques.

Il est proposé un procédé d'inspection d'un pneumatique qui comprend successivement une première séquence et une seconde séquence.

La première séquence consiste à entraîner en rotation le pneumatique autour de son axe et, en même temps, réaliser au moins une première acquisition d'au moins une image macroscopique au moins partielle de la forme intérieure et/ou de la forme extérieure du pneumatique ; et soit à comparer l'image macroscopique acquise à au moins une image de référence mémorisée représentative d'une forme torique souhaitée du pneumatique soit d'analyser cette image macroscopique à l'aide d'algorithmes informatiques de traitement d'images en vue de détecter d'éventuels écarts à la norme du pneumatique et délivrer soit un signal de refus soit un signal d'acceptation du pneumatique.

La seconde séquence consiste soit à évacuer le pneumatique si le signal de refus est émis, soit, si le signal d'acceptation est émis, à entraîner en rotation le pneumatique autour de son axe et, en même temps, réaliser au moins une seconde acquisition d'au moins une image microscopique au moins partielle de la surface intérieure et/ou de la surface extérieure du pneumatique ; et soit à comparer l'image microscopique acquise à au moins une image de référence mémorisée représentative d'un état de surface souhaité du pneumatique soit à analyser cette image microscopique à l'aide d'algorithmes informatiques de traitement d'images en vue de détecter d'éventuels écarts à la norme et de façon à délivrer des signaux correspondants.

Le procédé comprend une séquence intermédiaire entre lesdites première et seconde acquisitions d'images, qui consiste à entraîner en rotation le pneumatique autour de son axe et, en même temps temps, à réaliser une opération de brossage d'au moins une partie de la surface extérieure du pneumatique.

Il est également proposé une ligne d'inspection de pneumatiques qui comprend :
- un premier poste d'inspection macroscopique comprenant des moyens d'entrainement aptes à entraîner en rotation le pneumatique autour de son axe et des moyens associés d'acquisition d'images pour acquérir au moins une image macroscopique au moins partielle de la forme intérieure et/ou de la forme extérieure du pneumatique;
- des premiers moyens électroniques pour comparer l'image macroscopique acquise à au moins une image de référence mémorisée représentative d'une forme torique souhaitée du pneumatique en vue de détecter d'éventuels écarts à la norme et aptes à délivrer soit un premier signal de refus soit un premier signal d'acceptation du pneumatique ;

- un second poste d'inspection microscopique comprenant des moyens d'entrainement aptes à entraîner en rotation le pneumatique autour de son axe et des moyens associés d'acquisition d'images pour acquérir au moins une image microscopique au moins partielle de la surface intérieure et/ou de la surface extérieure du pneumatique ;
- des seconds moyens électroniques pour soit comparer l'image microscopique acquise à au moins une image de référence mémorisée soit d'analyser cette image microscopique à l'aide d'algorithmes informatiques de traitement d'images et aptes à délivrer des signaux correspondants ; et
- des moyens de transfert du pneumatique depuis le premier poste soit vers une évacuation si ledit signal de refus est émis soit, si ledit signal d'acceptation est émis, vers le second poste d'inspection.

La ligne d'inspection comprend en outre un poste intermédiaire de brossage comprenant des moyens de brossage pour brosser la surface extérieure du pneumatique entre lesdites acquisitions d'images macroscopique et microscopique.

Selon une variante de réalisation, le poste intermédiaire de brossage peut comprendre des moyens d'écartement pour écarter axialement les bourrelets du pneumatique. Selon une variante de réalisation, le poste intermédiaire de brossage peut comprendre des moyens d'entraînement en rotation du pneumatique.

Les moyens d'entraînement du premier poste d'inspection peuvent avantageusement comprendre un arbre rotatif muni d'une pluralité de rayons déterminant un plan de support sur lequel le pneumatique peut être posé.

Le second poste d'inspection peut avantageusement comprendre une première station d'inspection comprenant des premiers moyens d'entrainement en rotation du pneumatique autour de son axe et des premiers moyens associés d'acquisition d'images, une seconde station d'inspection comprenant des second moyens d'entrainement en rotation du pneumatique autour de son axe et des seconds moyens associés d'acquisition d'images, et des moyens de transfert du pneumatique depuis les premiers moyens d'entrainement sur les seconds moyens d'entrainement, ces moyens de transfert incluant des moyens de retournement du pneumatique.

Les moyens de transfert peuvent comprendre un premier robot de préhension apte à saisir un bourrelet du pneumatique et un second robot de préhension apte à saisir l'autre bourrelet du pneumatique, les moyens de retournement du pneumatique comprenant des moyens pour enserrer la bande de roulement du pneumatique.

Les moyens de retournement peuvent comprendre des moyens pour saisir le pneumatique en prenant appui sur sa bande de roulement.

Une ligne d'inspection de pneumatiques et son fonctionnement vont maintenant être décrits à titre d'exemples non limitatifs, illustrés par le dessin sur lequel :
- la figure 1 représente une vue générale en perspective d'une ligne d'inspection ;
- la figure 2 représente une vue schématique en coupe d'un premier poste d'inspection macroscopique de la ligne d'inspection ;
- la figure 3 représente une vue schématique en perspective, partiellement en coupe, d'un poste de brossage de la ligne d'inspection ;
- la figure 4 représente une vue schématique en perspective, partiellement en coupe, d'un second poste d'inspection microscopique de la ligne d'inspection ;
- la figure 5 représente une vue schématique en perspective, partiellement en coupe, d'un détail du second poste d'inspection microscopique de la ligne d'inspection ;
- la figure 6 représente un schéma électronique d'un dispositif électronique associé au premier poste d'inspection ; et
- la figure 7 représente un schéma électronique d'un dispositif électronique associé au second poste d'inspection.

Dans la description qui suit, il sera question d'un pneumatique P à inspecter qui comprend une bande de roulement périphérique R, des flancs latéraux F1 et F1 et des bourrelets annulaires B1 et B2 terminant intérieurement ces flancs.

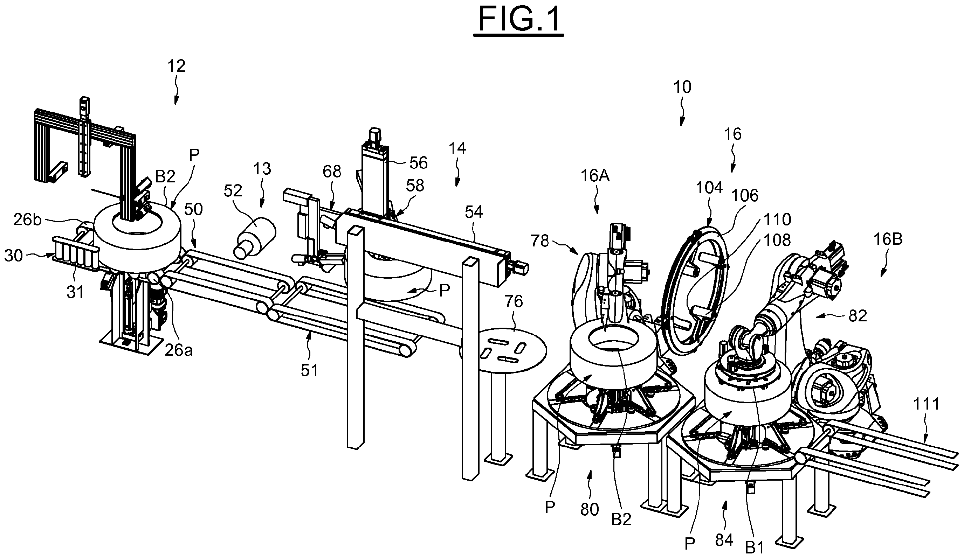

Sur la figure 1 est illustrée, de façon générale, une ligne d'inspection 10 de pneumatiques P, qui comprend successivement un poste d'inspection macroscopique 12 pour accomplir une première séquence d'inspection, un poste de sélection 13, un poste intermédiaire de brossage 14 et un poste d'inspection microscopique 16 pour accomplir une seconde séquence d'inspection si les pneumatiques ont été acceptés au poste de sélection.

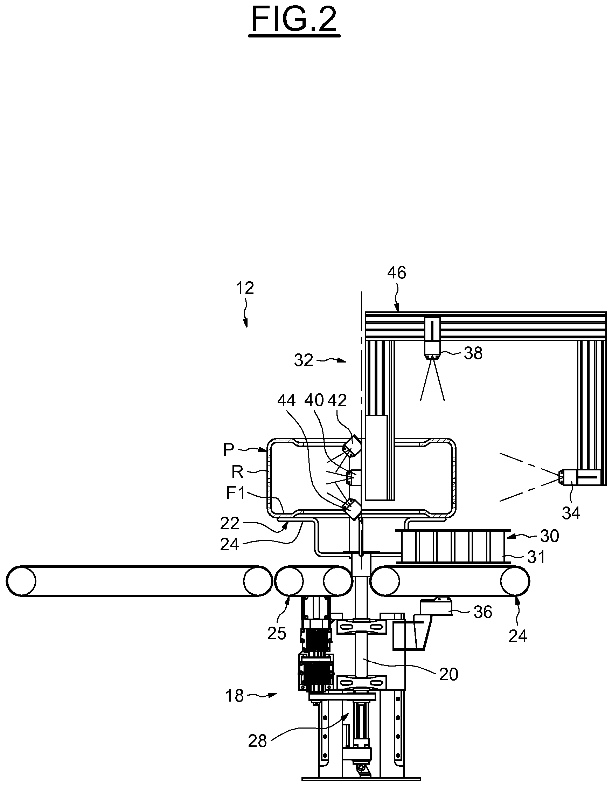

Comme illustré plus particulièrement sur les figures 1 et 2, le poste d'inspection macroscopique 12 comprend des moyens d'entraînement en rotation 18 d'un pneumatique P qui comprennent un arbre vertical rotatif 20 dont l'extrémité supérieure est munie d'un croisillon de support 22 composé par exemple de quatre bras radiaux de support 24 disposés à 90°, qui déterminent un plan horizontal de support. Ces bras radiaux 24 peuvent par exemple être formés par des profilés de faibles sections circulaires.

Le poste d'inspection macroscopique 12 comprend des moyens de transport horizontal comprenant des tapis de transport 24 et 25 composés respectivement de paires de bandes latérales parallèles sans fin 26a et 26b.

L'arbre vertical rotatif 20 peut être déplacé verticalement grâce à un mécanisme de relevage 28 représenté schématiquement entre une position basse dans laquelle les bras radiaux de support 22 sont placés au-dessous des tapis de transport 24 et 25 et une position haute dans laquelle les bras radiaux de support 22 sont placés au-dessus du plan des tapis de transport 24.

Les pneumatiques P arrivent dans la ligne d'inspection à plat sur les tapis de transport 26, par exemple son flanc F1 étant sur ces tapis, ces derniers sont activés de façon à placer le pneumatique P au-dessus et à distance du croisillon de support 22 disposé en position basse.

Des moyens de centrage 30, comprenant par exemple des galets 31 à axes verticaux, peuvent être mis en œuvre pour placer l'axe vertical du pneumatique P de préférence concentriquement à l'arbre vertical 20 en agissant sur la bande de roulement R du pneumatique P.

Le mécanisme 28 est alors activé de façon que l'arbre vertical rotatif 20 soit relevé jusqu'à sa position haute précitée. Ce faisant, le croisillon 22 prend le pneumatique P par le dessous, le soulève et l'écarte vers le haut au-dessus et à distance des tapis de transport 24 et 25, pour le placer dans une position haute d'inspection telle que représentée sur la figure 2.

Le poste d'inspection macroscopique 12 comprend en outre des moyens d'acquisition d'images 32 pour l'acquisition d'images macroscopiques du pneumatique P.

Ces moyens d'acquisition d'images 32 comprennent par exemple trois caméras extérieures, dont une caméra 34 orientée de façon à viser la surface extérieure de la bande de roulement R du pneumatique P, une caméra 36 orientée de façon à viser la surface extérieure du flan F1 du pneumatique P1 et une caméra 38 orientée de façon à viser la surface extérieure du flanc F2 du pneumatique P.

Les moyens d'acquisition d'images 32 comprennent par exemple trois caméras intérieures, dont une caméra 40 orientée de façon à viser la surface intérieure de la bande de roulement R du pneumatique P, une caméra 42 orientée de façon à viser la surface intérieure du flan F1 du pneumatique P et une caméra 44 orientée de façon à viser la surface intérieure du flan F2 du pneumatique P.

Selon un mode particulier de réalisation, les caméras extérieures 34 et 36 et les caméras intérieures 40, 42 et 44 sont montées sur un support 46 de telle sorte que lorsque le pneumatique P est à sa position haute d'inspection, ces caméras soient directement à leurs positions souhaitées relatives par rapport au pneumatique P. Par ailleurs, la caméra extérieure 38 est placée sous les tapis de transport 24 et 25, son champ de vision passant entre les bandes 26a et 26b de ces tapis.

Des moyens d'éclairage (non représentés) sont aussi prévus pour éclairer convenablement la surface extérieure et la surface intérieure du pneumatique P de façon que les moyens d'acquisition d'images 32 soient efficaces. Ces moyens d'éclairage sont agencés pour éclairer les zones visées par les caméras précitées.

Un pneumatique P étant à sa position haute d'inspection précitée, l'arbre rotatif 20 est mis en rotation et entraîne en rotation le pneumatique P, cette rotation étant contrôlée par un capteur C1 d'indexation angulaire (non représenté). En même temps, au cours de cette rotation, des images macroscopiques extérieures et intérieures du pneumatique P peuvent être acquises par les moyens d'acquisition d'images 32, par exemple sur un tour du pneumatique P.

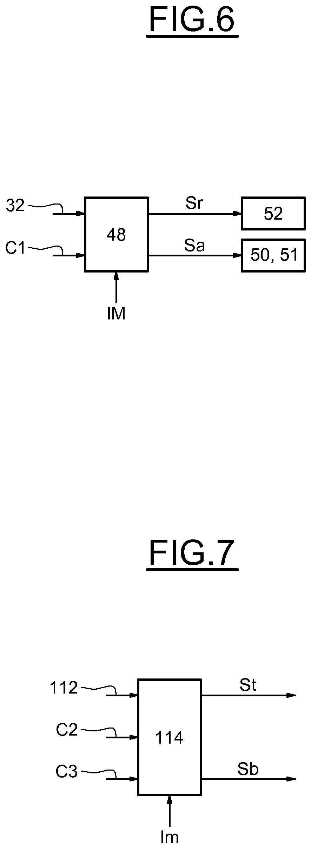

Comme illustré sur la figure 6, le poste d'inspection macroscopique 12 comprend en outre un dispositif électronique 48 qui reçoit les signaux issus des moyens d'acquisition d'images 32 et des capteurs d'indexation correspondants.

Le dispositif électronique 48 est programmé de façon à constituer des images macroscopiques des surfaces intérieure et extérieure du pneumatique P et soit à comparer les signaux représentatifs d'images macroscopiques réelles du pneumatique P avec une ou des images de référence mémorisées IM représentatives soit d'analyser cette image macroscopique à l'aide d'algorithmes informatiques de traitement d'images en vue de détecter d'éventuels écarts à la norme eu égard à la forme du pneumatique P.

Au terme de cette comparaison, le dispositif électronique 48 délivre soit un signal d'acceptation Sa soit un signal de refus Sr.

Cette comparaison consiste à comparer les positions spatiales relatives de points ou pixels espacées des surfaces extérieures et/ou intérieures du pneumatique P inspecté avec les positions spatiales relatives mémorisées de points ou pixels espacées des surfaces extérieures et intérieures d'un pneumatique de référence, selon une faible résolution spatiale.

Par exemple, la distance entre les points ou pixels peut être comprise entre un millimètre et cinq millimètres. Ces points ou pixels peuvent être définis sur des génératrices circonférentielles espacées et/ou des génératrices espacées situées dans des plans contenant l'axe du pneumatique. On peut noter que les bras de support 24 du pneumatique P, qui passent devant la caméra 36, ne constituent pas une gêne lors de l'acquisition de l'image macroscopique de la surface extérieure du pneumatique P car ils sont aisément identifiables par le dispositif électronique.

Lorsque l'acquisition exécutée par les moyens d'acquisition d'images 32 est terminée, le mécanisme de soulèvement 28 est activé de façon à ramener vers le bas l'arbre rotatif 20 et le croisillon 22 en position basse et en même temps redéposer le pneumatique P sur les tapis 24 et 25.

Les tapis 24 et 25 sont alors activés de façon à déplacer le pneumatique P sur un tapis intermédiaire 50, également activé, du poste de sélection 11.

Le poste d'inspection macroscopique 12 est alors prêt pour accueillir et inspecter un pneumatique P suivant.

Lorsque le pneumatique P est complètement sur le tapis intermédiaire 50, ce dernier est stoppé de façon à immobiliser le pneumatique P à une position souhaitée, dans le poste de sélection 11.

Si le signal de refus Sr est délivré par le dispositif électronique 48, le pneumatique P est extrait de la ligne d'inspection 10.

Soit le signal de refus Sr active un moyen d'avertissement sonore ou lumineux et, alors, un opérateur évacue le pneumatique P.

Soit la ligne d'inspection 10 est par exemple équipée d'un pousseur transversal 52, par exemple à vérin, qui est activé par le signal de refus Sr et évacue le pneumatique P par un côté du tapis intermédiaire 50.

Si le signal d'acceptation Sa est délivré par le dispositif électronique 48, le tapis intermédiaire 50 transporte le pneumatique P vers un tapis 51 du poste de brossage 12. Le tapis 51 est activé puis stoppé de façon à immobiliser le pneumatique P à ce poste de brossage 12.

Selon une variante de réalisation, le dispositif électronique 48 peut être équipé d'un écran de visualisation de la forme torique du pneumatique P et de la forme torique souhaitée et les écarts à la norme peuvent être mis en valeur sur cet écran. Dans ce cas, un opérateur pourrait prendre la décision de refus ou d'acceptation du pneumatique P.

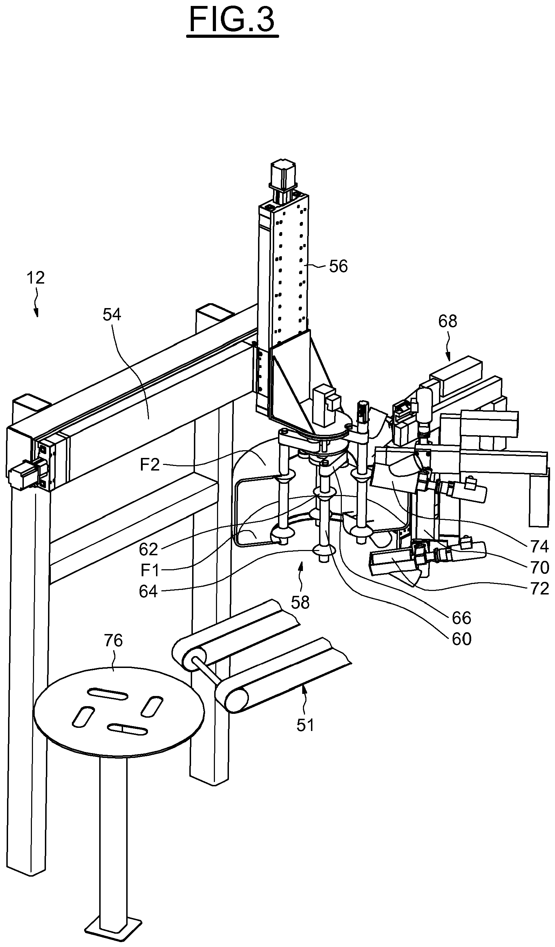

Comme illustré schématiquement sur les figures 1 et 3, le poste de brossage 12 comprend une glissière horizontale 54 qui porte une glissière verticale 56 sur laquelle est monté un dispositif de préhension et d'entraînement en rotation 58 apte à prendre le pneumatique P par sa partie centrale et à l'entraîner en rotation.

Selon un exemple de réalisation représenté, le dispositif de préhension et d'entraînement en rotation 58 comprend quatre aiguilles verticales 60 munies de paires d'appuis supérieur et inférieur 62 et 64 espacés verticalement et en saillie latérale, et portés par des bras articulés 66 actionnables par des moyens non représentés.

Un pneumatique P, dont la forme torique a été accepté précédemment, étant arrivé au poste de brossage 12, le dispositif de préhension et d'entraînement en rotation 58 est déplacé vers le bas le long de la glissière verticale 56 de façon que les aiguilles 60 pénètrent dans le passage axial du pneumatique P. Puis, les bras 66 sont actionnés pour écarter radialement les aiguilles 60 jusqu'aux bourrelets B1 et B2 du pneumatique P, de telle sorte que les paires d'appuis 62 et 64 soient entre ces bourrelets Blet B2.

Puis, le dispositif de préhension et d'entraînement en rotation 58 est déplacé vers le haut le long de la glissière verticale 56 de telle sorte que les appuis supérieurs 62 prennent et soulèvent le pneumatique P jusqu'à une position haute de brossage visible sur la figure 2.

Puis, les appuis supérieur et inférieur 62 et 64 sont écartés par des moyens non représentés de façon à écarter les bourrelets du pneumatique P afin de rendre les flancs F1 et F2 du pneumatique aussi plats que possible.

Le poste de brossage 12 comprend un système de brossage 68 qui comprend par exemple trois brosses 70, 72 et 74, par exemple cylindriques, et qui est apte à déplacer ces brosses, par exemple par l'intermédiaire de bras ou de glissières et de vérins, et à entraîner en rotation ces brosses, par l'intermédiaire de moteurs.

Le pneumatique P étant à sa position de brossage indiquée précédemment, le système de brossage 68 est activé pour déplacer les brosses 70, 72 et 74 et les placer en contact avec la surface extérieure du pneumatique P, la brosse 70 étant en contact avec la bande de roulement R, la brosse 72 étant en contact avec le flanc F1 et la brosse 74 étant en contact avec le flanc F2.

Grâce à la combinaison de l'entraînement en rotation du pneumatique P autour de son axe par le dispositif 58 et de l'entraînement en rotation des brosses 70, 72 et 74 par leurs moteurs, la surface extérieure du pneumatique P est nettoyée. En particulier les particules de matière plus ou moins grosses, issues de la fabrication du pneumatique P notamment lors de son démoulage et s'étant déposées et collées sur la surface extérieure du pneumatique P, sont éliminées.

Lorsque l'opération de brossage est terminée, la rotation du pneumatique P est stoppée et le système de brossage 68 est activé de façon à écarter les brosses 70, 72 et 74 du pneumatique P.

Ensuite, la glissière verticale 56 est déplacée le long de la glissière horizontale 54 de façon à amener le pneumatique P au-dessus d'un plateau de transfert 76 et le dispositif de préhension et d'entraînement en rotation 58 est déplacé vers le bas le long de la glissière verticale 56 de façon à poser à plat le pneumatique P sur le plateau de transfert 76, son flanc F1 étant sur ce plateau 76

Puis, le dispositif de préhension et d'entraînement en rotation 58 est déplacé pour exécuter une opération de nettoyage d'un pneumatique P suivant.

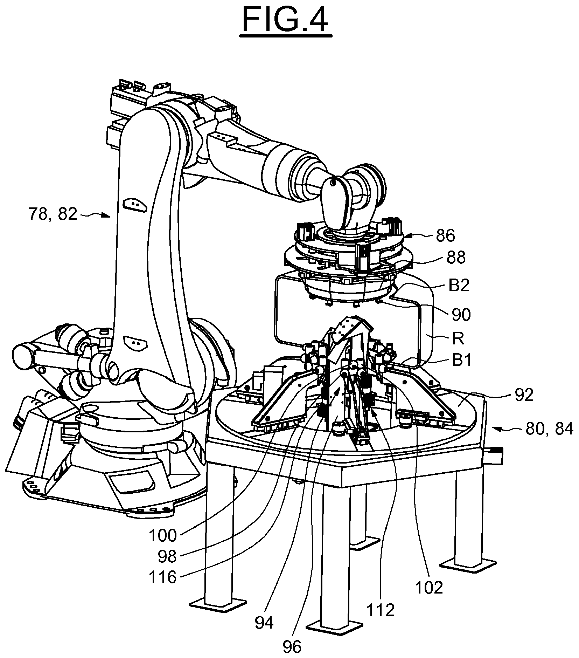

Comme illustré sur les figures 1 et 4, le poste d'inspection microscopique 16 comprend une première station d'inspection microscopique 16A équipée d'un premier robot de manipulation 78 et d'une première table 80 et une seconde station d'inspection microscopique 16B équipée d'un second robot de manipulation 82 et d'une seconde table 84.

Les robots de manipulation 78 et 82 comprennent respectivement une tête de préhension et d'entrainement en rotation 86 qui comprend une virole rotative de centrage 88 munie de crochets 90, adaptés pour saisir un bourrelet d'un pneumatique P et qui comprend un moteur (non visible sur les figures) apte à entraîner en rotation la virole 88.

Les tables 80 et 84 comprennent un plateau 92 et des modules de guidage 94 respectivement portés par des chariots 96 montés coulissant radialement par rapport à un axe vertical sur le plateau 92. Chaque module 94 comprend des galets 98 et 100 espacés verticalement déterminant entre eux des espaces ouverts radialement vers l'extérieur et des galets de centrage 102.

Lorsqu'un bourrelet d'un pneumatique P est placé périphériquement et extérieurement aux espaces entre les galets 98 et 100 des modules 94, l'actionnement des chariots 96 radialement vers l'extérieur permet de placer les galets 98 et 100 de part et d'autre de ce bourrelet et les galets de centrage 102 contre le bord intérieur du bourrelet, et ainsi de saisir ce bourrelet en différents endroit de sa périphérie.

Entre les stations d'inspection microscopique 16A et 16B, le poste d'inspection microscopique 16 comprend un dispositif d'inversion ou de retournement 104 qui comprend, monté sur un support non représenté, une bague 106, par exemple à axe horizontal, munie d'organes de maintien 108 placés intérieurement à cette bague et portés par des leviers intermédiaires de manœuvre 110, ces leviers étant reliés à des moyens d'actionnement (non représentés) pour déplacer les organes de maintien 108 substantiellement radialement à la bague 106.

Un pneumatique P brossé étant disposé à plat sur le plateau de transfert 76, le robot 78 de la première station d'inspection microscopique 16A est activé de façon que sa tête de préhension et d'entrainement en rotation 86 vienne saisir le bourrelet supérieur B2 de ce pneumatique P comme décrit précédemment.

Le robot 78 est ensuite activé de façon à amener le pneumatique P à plat au-dessus de la table 80 dans une position telle que les modules 94 de cette table 80 peuvent être déplacés radialement vers l'extérieur et saisissent le bourrelet inférieur B1 du pneumatique P comme décrit précédemment.

Le pneumatique P est alors dans une première position d'inspection microscopique dans laquelle il peut être entraîné en rotation autour de son axe par la virole 88 reliée à un moteur inclus de la tête de préhension et d'entrainement en rotation 86, son bourrelet inférieur B2 étant guidé par les modules de guidage 94.

Le pneumatique étant ensuite immobilisé, les modules 94 de la table 80 sont déplacés radialement vers l'intérieur de façon à libérer le bourrelet inférieur B1 du pneumatique P comme décrit précédemment.

Le robot 78 est ensuite activé de façon à extraire le pneumatique P de la première station d'inspection 16A, à le faire pivoter pour placer son axe horizontalement et à le placer au travers de l'espace intérieur formé par les organes de maintien 108 du dispositif d'inversion 104, par un côté de la bague 106. Puis, les organes de maintien 108 sont déplacés de façon à prendre appui sur la bande de roulement R du pneumatique P en différents endroits de sa périphérie et ainsi enserrer et maintenir le pneumatique P.

Ensuite, la tête de préhension et d'entrainement en rotation 86 du robot 78 libère le pneumatique P et le robot 78 est alors disponible pour aller saisir un pneumatique suivant disposé sur le plateau de transfert 76.

Après quoi, le robot 82 de la seconde station d'inspection microscopique 16B est activé de façon que sa tête de préhension et d'entrainement en rotation 86 vienne saisir, comme décrit précédemment, par l'autre côté de la bague 106, le bourrelet B1, opposé au bourrelet B2 qui avait été pris par le robot 78, du pneumatique P retenu par le dispositif d'inversion 104.

Puis, les organes de maintien 108 du dispositif d'inversion 104 sont déplacés pour libérer le pneumatique P.

Le robot 82 est ensuite activé de façon à amener le pneumatique P à plat au-dessus de la table 84 et les modules 94 de cette table 84 sont déplacés de façon à saisir le bourrelet B1 devenu inférieur du pneumatique P, comme décrit précédemment.

Le pneumatique P est alors dans une seconde position d'inspection microscopique dans laquelle il peut être entraîné en rotation par la virole de la tête de préhension et d'entrainement en rotation 86 du robot 82, son bourrelet B2 devenu inférieur étant guidé par les modules de guidage 94 de la table 84.

Ensuite, les modules 94 de cette table 84 sont déplacés de façon à libérer le bourrelet inférieur B2 du pneumatique P comme décrit précédemment.

Le robot 82 est ensuite activé de façon à extraire le pneumatique P de la seconde station d'inspection 16B et le placer sur un tapis d'évacuation finale 111, puis le libérer en activant la tête de préhension et d'entrainement en rotation 86 du robot 82.

Le robot 82 est alors disponible pour aller saisir un pneumatique P suivant disposé dans le dispositif d'inversion 104.

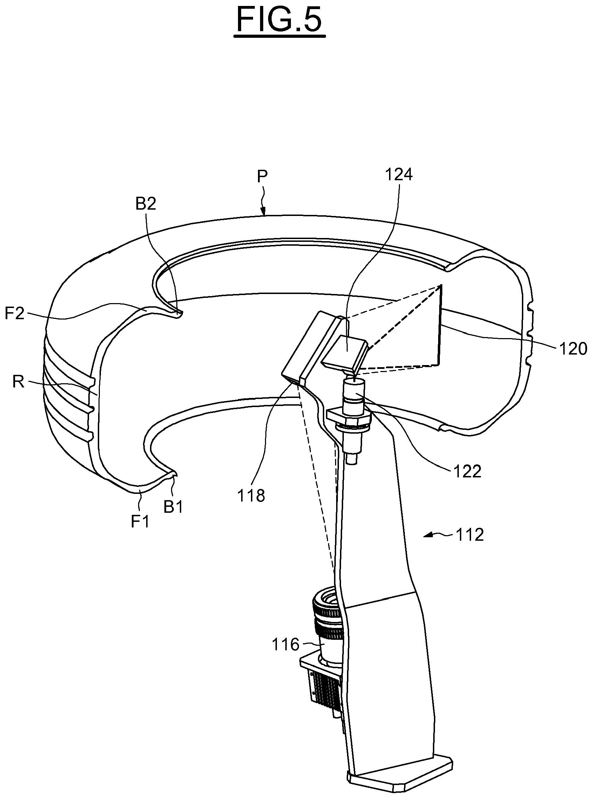

Comme illustré sur les figures 4 et 5, les stations d'inspection microscopique 16A et 16B comprennent en outre, respectivement, des moyens d'acquisition d'images 112, montés sur les tables 80 et 84, pour l'acquisition d'images microscopiques de la surface intérieure et de la surface extérieure du pneumatique P, plus particulièrement de la moitié inférieure, voire légèrement plus, du pneumatique P disposé dans ces stations d'inspection dans la position d'inspection décrite précédemment et entraîné en rotation.

Par exemple, chaque moyen d'acquisition d'images 112 est destiné à acquérir des images de surfaces annulaires qui, concaténées, recouvrent au moins la moitié de la surface intérieure et de la surface extérieure du pneumatique P.

Comme illustré plus particulièrement sur la figure 5, un moyen d'acquisition d'images 112 comprend par exemple, montés sur des supports 114, des caméras 116, des miroirs 118 déviant les champs de vision des caméras 116 vers des zones d'inspection de largeurs restreintes 120 de la surface intérieure du pneumatique, des moyens d'éclairage 122 et des miroirs 124 déviant la lumière émise vers ces zones d'inspection 120, ces zones d'inspection s'étendant perpendiculairement au sens circonférentiel du pneumatique.

Certains des moyens d'acquisition d'images 112 peuvent comprendre des miroirs devant être disposés à l'intérieur du pneumatique P. Dans le cas, des moyens de déplacement sont prévus pour déplacer leurs supports 114 sur les tables 80 et 84 entre une position rétractée centrale et une position avancée, de façon à permettre, lorsqu'ils sont en position rétractée centrale, d'amener verticalement le pneumatique P à sa position d'inspection microscopique précitée et l'en extraire comme décrit précédemment.

De façon équivalente, les moyens d'acquisition d'images 112 comprennent des caméras, des moyens d'éclairage associés et de miroirs associés pour acquérir des images de zones d'inspection sur la moitié inférieure de la face extérieure du pneumatique P.

Le pneumatique P étant à sa position d'inspection microscopique précitée dans respectivement les stations d'inspection microscopiques 16A et 16B, le pneumatique P est entraîné en rotation comme décrit précédemment, cette rotation étant contrôlée par un capteur d'indexation angulaire (non représenté), respectivement C2 et C3. Au cours de cette rotation, des images microscopiques extérieures et intérieures de la moitié correspondante du pneumatique P peuvent être acquises par les moyens d'acquisition d'images 112, par exemple sur un tour du pneumatique P.

Comme illustré sur la figure 7, le poste d'inspection microscopique 16 comprend en outre un dispositif électronique 114 qui reçoit les signaux issus des moyens d'acquisition d'images 112 et des capteurs d'indexation correspondants C2 et C3.

Le dispositif électronique 114 est programmé de façon à constituer des images microscopiques des états de surface des surfaces intérieure et extérieure du pneumatique P et soit à comparer les signaux représentatifs d'images microscopiques réelles du pneumatique P avec une ou des images de référence mémorisées Im représentative d'un état de surface souhaité du pneumatique, soit d'analyser ces images microscopique à l'aide d'algorithmes informatiques de traitement d'images en vue de détecter d'éventuels écarts à la norme et de façon à délivrer des signaux correspondants. Le dispositif électronique 114 peut en outre être équipé d'un écran de visualisation (non représenté) des écarts détectés. Dans le cas, un opérateur pourrait prendre la décision de valider ou l'écart constaté et en conséquence accepter ou ne pas accepter le pneumatique P.

Selon une variante de réalisation, le poste d'inspection microscopique 16 pourrait comprendre une seule station d'inspection microscopique, équipée de moyens d'acquisition d'images des états de surface des surfaces intérieure et extérieure du pneumatique P.

La ligne d'inspection 10 peut être soumise à un système électronique de commande global, de telle sorte que des pneumatiques P puissent être inspectés les uns à la suite des autres de façon automatique ou de façon partiellement automatique.

Les différentes parties de la ligne d'inspection 10 décrite disposent des réglages nécessaires de façon à pouvoir recevoir et inspecter des pneumatiques de dimensions différentes, les dispositifs électroniques étant programmés en conséquence.

## Revendications

1. Procédé d'inspection d'un pneumatique comprenant :
- dans une première séquence :
- entraîner en rotation le pneumatique autour de son axe et, en même temps, réaliser au moins une première acquisition d'au moins une image macroscopique au moins partielle de la forme intérieure et/ou de la forme extérieure du pneumatique ;
- analyser cette image macroscopique à l'aide d'algorithmes informatiques de traitement d'images et la comparer à au moins une image de référence mémorisée représentative en vue de détecter d'éventuels écarts à la norme et délivrer soit un signal de refus soit un signal d'acceptation du pneumatique,
**caractérisé en ce que** le procédé comprend :
- dans une seconde séquence :
- soit évacuer le pneumatique si le signal de refus est émis,
- soit, si le signal d'acceptation est émis :
entraîner en rotation le pneumatique autour de son axe et, en même temps, réaliser au moins une seconde acquisition d'au moins une image microscopique au moins partielle de la surface intérieure et/ou de la surface extérieure du pneumatique;
et analyser cette image microscopique à l'aide d'algorithmes informatiques de traitement d'images et la comparer à au moins une image de référence mémorisée représentative d'un état de surface souhaité du pneumatique en vue de détecter d'éventuels écarts locaux de surface du pneumatique et de façon à délivrer des signaux correspondants.
- dans une séquence intermédiaire entre lesdites première et seconde acquisitions d'images :
- entraîner en rotation le pneumatique autour de son axe et, en même temps, réaliser une opération de brossage d'au moins une partie de la surface extérieure du pneumatique.

2. Ligne d'inspection de pneumatiques comprenant :
- un premier poste d'inspection macroscopique (12) comprenant des moyens d'entrainement aptes à entraîner en rotation le pneumatique autour de son axe et des moyens associés d'acquisition d'images pour acquérir au moins une image macroscopique au moins partielle de la forme intérieure et/ou de la forme extérieure du pneumatique ;
- des premiers moyens électroniques (48) pour comparer l'image macroscopique acquise à au moins une image de référence mémorisée représentative et d'analyser cette image à l'aide d'algorithmes informatiques de traitement d'images en vue de détecter d'éventuels écarts et aptes à délivrer soit un premier signal de refus soit un premier signal d'acceptation du pneumatique ;
- un second poste d'inspection microscopique (16) comprenant des moyens d'entrainement aptes à entraîner en rotation le pneumatique autour de son axe et des moyens associés d'acquisition d'images pour acquérir au moins une image microscopique au moins partielle de la surface intérieure et/ou de la surface extérieure du pneumatique ;
- des seconds moyens électroniques (114) pour analyser cette image microscopique à l'aide d'algorithmes informatiques de traitement d'images et comparer l'image microscopique acquise à au moins une image de référence mémorisée représentative d'un état de surface souhaité du pneumatique en vue de détecter d'éventuels écarts locaux de surface du pneumatique et aptes à délivrer des signaux correspondants ;
- des moyens de transfert (50) du pneumatique depuis le premier poste soit vers une évacuation si ledit signal de refus est émis soit, si ledit signal d'acceptation est émis, vers le second poste d'inspection, et
- un poste intermédiaire de brossage comprenant des moyens de brossage (68) pour brosser la surface extérieure du pneumatique entre lesdites acquisitions d'images macroscopique et microscopique.

3. Ligne d'inspection selon la revendication 2, dans laquelle le poste intermédiaire de brossage comprend des moyens d'écartement (62, 64) pour écarter axialement les bourrelets du pneumatique.

4. Ligne d'inspection selon l'une des revendications 2 et 3, dans laquelle le poste intermédiaire de brossage comprend des moyens d'entraînement en rotation (58) du pneumatique.

5. Ligne d'inspection selon l'une quelconque des revendications 2 à 4, dans laquelle les moyens d'entraînement du premier poste d'inspection comprennent un arbre rotatif (20) muni d'une pluralité de rayons (24) déterminant un plan de support sur lequel le pneumatique peut être posé.

6. Ligne d'inspection selon l'une quelconque des revendications 2 à 5, dans laquelle le second poste d'inspection (16) comprend :
- une première station d'inspection (16A) comprenant des premiers moyens d'entrainement en rotation du pneumatique autour de son axe et des premiers moyens associés d'acquisition d'images,
- une seconde station d'inspection (16B) comprenant des second moyens d'entrainement en rotation du pneumatique autour de son axe et des seconds moyens associés d'acquisition d'images,
- et des moyens de transfert (104) du pneumatique depuis les premiers moyens d'entrainement sur les seconds moyens d'entrainement, ces moyens de transfert incluant des moyens de retournement du pneumatique.

7. Ligne d'inspection selon la revendication 6, dans laquelle les moyens de transfert comprennent un premier robot de préhension (78) apte à saisir un bourrelet du pneumatique et un second robot de préhension (82) apte à saisir l'autre bourrelet du pneumatique, les moyens de retournement du pneumatique comprenant des moyens pour enserrer la bande de roulement du pneumatique.

8. Ligne d'inspection selon l'une des revendications 6 et 7, dans laquelle les moyens de retournement comprennent des moyens (108) pour saisir le pneumatique en prenant appui sur sa bande de roulement.

## Patentansprüche

1. Verfahren zum Untersuchen eines Luftreifens, das Folgendes umfasst:
- in einer ersten Sequenz:
- rotatorisches Antreiben des Luftreifens um seine Achse und gleichzeitig Ausführen wenigstens einer ersten Erfassung wenigstens eines makroskopischen Bildes wenigstens eines Teils der inneren Form und/oder der äußeren Form des Luftreifens;
- Analysieren dieses makroskopischen Bildes mit Hilfe informationstechnischer Bildverarbeitungsalgorithmen und Vergleichen dieses Bildes mit wenigstens einem repräsentativen gespeicherten Referenzbild, um eventuelle Abweichungen von der Norm zu detektieren und entweder ein Signal für die Zurückweisung oder ein Signal für die Annahme des Luftreifens zu liefern,
**dadurch gekennzeichnet, dass** das Verfahren Folgendes umfasst:
- in einer zweiten Sequenz:
- entweder Entleeren des Luftreifens, falls das Zurückweisungssignal ausgegeben wird,
- oder, falls das Annahmesignal ausgegeben wird:
rotatorisches Antreiben des Luftreifens um seine Achse und gleichzeitig Ausführen wenigstens einer zweiten Erfassung wenigstens eines mikroskopischen Bildes wenigstens eines Teils der inneren Oberfläche und/oder der äußeren Oberfläche des Luftreifens; und
- Analysieren dieses mikroskopischen Bildes mit Hilfe informationstechnischer Bildverarbeitungsalgorithmen und Vergleichen dieses Bildes mit wenigstens einem repräsentativen gespeicherten Referenzbild eines gewünschten Oberflächenzustands des Luftreifens, um eventuelle lokale Abweichungen der Oberfläche des Luftreifens zu detektieren und um entsprechende Signale zu liefern,
- in einer Zwischensequenz zwischen der ersten und der zweiten Bilderfassung:
- rotatorisches Antreiben des Luftreifens um seine Achse und gleichzeitig Ausführen eines Arbeitsgangs des Bürstens wenigstens eines Teils der äußeren Oberfläche des Luftreifens.

2. Luftreifenuntersuchungsstraße, die Folgendes umfasst:
- eine erste Anlage (12) für makroskopische Untersuchung, die Antriebsmittel, die den Luftreifen um seine Achse rotatorisch antreiben können, und zugeordnete Bilderfassungsmittel, um wenigstens ein makroskopisches Bild wenigstens eines Teils der inneren Form und/oder der äußeren Form des Luftreifens zu erfassen, enthält;
- erste elektronische Mittel (48), um das erfasste makroskopische Bild mit wenigstens einem repräsentativen gespeicherten Referenzbild zu vergleichen und um dieses Bild mit Hilfe informationstechnischer Bildverarbeitungsalgorithmen zu analysieren, um eventuelle Abweichungen zu detektieren, und um entweder ein erstes Signal für die Zurückweisung oder ein erstes Signal für die Annahme des Luftreifens zu liefern;
- eine zweite Anlage (16) für mikroskopische Untersuchung, die Antriebsmittel, die den Luftreifen um seine Achse rotatorisch antreiben können, und zugeordnete Bilderfassungsmittel, um wenigstens ein mikroskopisches Bild wenigstens eines Teils der inneren Oberfläche und/oder der äußeren Oberfläche des Luftreifens zu erfassen, enthält;
- zweite elektronische Mittel (114) zum Analysieren dieses mikroskopischen Bildes mit Hilfe informationstechnischer Bildverarbeitungsalgorithmen und zum Vergleichen des erfassten mikroskopischen Bildes mit wenigstens einem gespeicherten Referenzbild, das einen gewünschten Oberflächenzustand des Luftreifens repräsentiert, um eventuelle lokale Abweichungen der Oberfläche des Luftreifens zu detektieren, und zum Liefern entsprechender Signale;
- Mittel (50) zum Umladen des Luftreifens von der ersten Anlage entweder zu einer Entleerungsstation, falls das Zurückweisungssignal ausgegeben wird, oder, falls das Annahmesignal ausgegeben wird, zu der zweiten Untersuchungsanlage, und
- eine Bürst-Zwischenanlage, die Bürstmittel (68) enthält, um die äußere Oberfläche des Luftreifens zwischen den Erfassungen der makroskopischen und der mikroskopischen Bilder zu bürsten.

3. Untersuchungsstraße nach Anspruch 2, wobei die Bürst-Zwischenanlage Beabstandungsmittel (62, 64) umfasst, um die Wulste des Luftreifens axial zu beabstanden.

4. Untersuchungsstraße nach einem der Ansprüche 2 und 3, wobei die Bürst-Zwischenanlage Mittel (58) für den rotatorischen Antrieb des Luftreifens umfasst.

5. Untersuchungsstraße nach einem der Ansprüche 2 bis 4, wobei die Antriebsmittel der ersten Untersuchungsanlage eine Drehwelle (20) aufweisen, die mehrere Radien (24) besitzt, die eine Tragebene festlegen, auf der der Luftreifen angeordnet werden kann.

6. Untersuchungsstraße nach einem der Ansprüche 2 bis 5, wobei die zweite Untersuchungsanlage (16) Folgendes umfasst:
- eine erste Untersuchungsstation (16A), die erste Mittel für den rotatorischen Antrieb des Luftreifens um seine Achse und erste zugeordnete Mittel für die Erfassung von Bildern enthält,
- eine zweite Untersuchungsstation (16B), die zweite Mittel für den rotatorischen Antrieb des Luftreifens um seine Achse und zweite zugeordnete Mittel für die Erfassung von Bildern enthält,
- und Mittel (104) zum Umladen des Luftreifens von den ersten Antriebsmitteln zu den zweiten Antriebsmitteln, wobei diese Umlademittel Mittel zum Umdrehen des Luftreifens aufweisen.

7. Untersuchungsstraße nach Anspruch 6, wobei die Umlademittel einen ersten Greifroboter (78), der einen Wulst des Luftreifens ergreifen kann, und einen zweiten Greifroboter (82), der den anderen Wulst des Luftreifens ergreifen kann, umfassen, wobei die Mittel zum Umdrehen des Luftreifens Mittel aufweisen, um die Lauffläche des Luftreifens einzuklemmen.

8. Untersuchungsstraße nach einem der Ansprüche 6 und 7, wobei die Umdrehmittel Mittel (108) umfassen, um den Luftreifen durch Abstützen auf seiner Lauffläche zu ergreifen.

## Claims

1. Inspection method for a tyre, comprising:
- in a first sequence:
- rotating the tyre about its axis and simultaneously carrying out at least a first acquisition of at least one at least partial macroscopic image of the inner shape and/or the outer shape of the tyre;
- analysing this macroscopic image with the aid of digital image processing algorithms and comparing it with at least one representative stored reference image, in order to detect any deviations from the standard, and delivering either a rejection signal or an acceptance signal for the tyre;
**characterized in that** the method comprises:
- in a second sequence:
- either discharging the tyre if the rejection signal is sent,
- or, if the acceptance signal is sent:
rotating the tyre about its axis and simultaneously carrying out at least a second acquisition of at least one at least partial microscopic image of the inner surface and/or the outer shape of the tyre;
and analysing this microscopic image with the aid of digital image processing algorithms and comparing it with at least one stored reference image representing a desired surface condition of the tyre, so as to detect any local deviations of the tyre surface and in order to deliver corresponding signals.
- in an intermediate sequence between said first and second image acquisitions:
- rotating the tyre about its axis while simultaneously carrying out an operation of brushing at least part of the outer surface of the tyre.

2. Inspection line for tyres, comprising:
- a first inspection post (12) for macroscopic inspection, comprising drive means capable of rotating the tyre about its axis and associated image acquisition means for acquiring at least one at least partial macroscopic image of the inner shape and/or the outer shape of the tyre;
- first electronic means (48) for comparing the acquired macroscopic image with at least one representative stored reference image and analysing this image with the aid of digital image processing algorithms in order to detect any deviations, these means being capable of delivering either a first rejection signal or a first acceptance signal for the tyre;
- a second inspection post (16) for microscopic inspection, comprising drive means capable of rotating the tyre about its axis and associated image acquisition means for acquiring at least one at least partial microscopic image of the inner surface and/or the outer surface of the tyre;
- second electronic means (114) for analysing this microscopic image with the aid of digital image processing algorithms and comparing the acquired microscopic image with at least one stored reference image representing a desired surface condition of the tyre, so as to detect any local deviations of the tyre surface, these means being capable of delivering corresponding signals; and
- transfer means (50) for transferring the tyre from the first post either to a discharge point, if said rejection signal is sent, or, if said acceptance signal is sent, to the second inspection post,
- an intermediate brushing post comprising brushing means (68) for brushing the outer surface of the tyre.

3. Inspection line according to Claim 2, wherein the intermediate brushing post comprises separating means (62, 64) for axially separating the beads of the tyre.

4. Inspection line according to either of Claims 2 and 3, wherein the intermediate brushing post comprises drive means (58) for rotating the tyre.

5. Inspection line according to any of Claims 2 to 4, wherein the drive means of the first inspection post comprise a rotating shaft (20) having a plurality of spokes (24) forming a support plane on which the tyre can be placed.

6. Inspection line according to any of Claims 2 to 5, wherein the second inspection post (16) comprises:
- a first inspection station (16A) comprising first drive means for rotating the tyre about its axis and first associated image acquisition means,
- a second inspection station (16B) comprising second drive means for rotating the tyre about its axis and second associated image acquisition means,
- and transfer means (104) for transferring the tyre from the first drive means to the second drive means, these transfer means including means for turning the tyre over.

7. Inspection line according to Claim 6, wherein the transfer means comprise a first gripping robot (78) capable of grasping one bead of the tyre and a second gripping robot (82) capable of grasping the other bead of the tyre, the means for turning the tyre over comprising means for clamping the tread of the tyre.

8. Inspection line according to either of Claims 6 and 7, wherein the turnover means comprise means (108) for grasping the tyre by bearing on its tread.
